# EUROPÄISCHE PATENTANMELDUNG

(11) **EP 4 520 549 A1**
(43) Veröffentlichungstag der Anmeldung: **12.03.2025**
(21) Anmeldenummer: 24194109.5
(22) Anmeldetag: 12.08.2024
(51) Int. Cl.: B60C 11/03, B60C 11/11

(54) **FAHRZEUGREIFEN**

(30) Priorität: 05.09.2023 DE 102023208523
(71) Anmelder: Continental Reifen Deutschland GmbH, 30175 Hannover (DE)
(72) Erfinder: Sudikatis, Florian, 30175 Hannover (DE)
(74) Vertreter: Continental Corporation

(57) **Zusammenfassung**

Fahrzeugreifen, bevorzugt für ein Leichtfahrzeug, besonders bevorzugt für ein Fahrrad und/oder einen Krankenfahrstuhl und/oder ein Motorrad, mit einem laufrichtungsgebunden gestalteten Laufstreifen (1) mit einer definierten Abrollrichtung bei Vorwärtsfahrt, wobei der Laufstreifen (1) eine Laufstreifenbasisfläche (1a) und eine Profilierung aus voneinander beabstandeten Schulterstollen (2) und mittigen Stollen (3) aufweist, wobei die Schulterstollen (2) an der Laufstreifenbasisfläche eine Stollenbasis und parallel zur Laufstreifenbasisfläche (1a) eine die Kontaktfläche zum Untergrund zur Verfügung stellende Deckfläche (5) aufweisen und zwischen dieser und der Stollenbasis (4) von Flanken (6, 7) umlaufen sind und an der Deckfläche (5) zur Laufstreifenmitte von einer Stollenkante (5a) mit einer zwischen ihren Kantenenden vorliegenden geraden Bezugslinie (b₁) begrenzt sind.

Eine Bezugsebene (mₐ), die senkrecht zur Laufstreifenbasisfläche (1a) sowie senkrecht zur und mittig durch die Bezugslinie (b₁) verläuft, gliedert Schulterstollen (2) in einen, in Abrollrichtung bei Vorwärtsfahrt betrachtet, zuerst in den Untergrund eintretenden, einlaufenden Stollenteil (2b₁) und einen auslaufenden Stollenteil (2b₂), wobei der einlaufende Stollenteil (2b₁) ein um 10% bis 50% größeres Gummivolumen aufweist als der auslaufende Stollenteil (2b₂).

## Beschreibung

Die Erfindung betrifft einen Fahrzeugreifen, bevorzugt für ein Leichtfahrzeug, besonders bevorzugt für ein Fahrrad und/oder einen Krankenfahrstuhl und/oder ein Motorrad, mit einem laufrichtungsgebunden gestalteten Laufstreifen mit einer definierten Abrollrichtung bei Vorwärtsfahrt, wobei der Laufstreifen eine Laufstreifenbasisfläche und eine Profilierung aus voneinander beabstandeten Schulterstollen und mittigen Stollen aufweist, wobei die Schulterstollen an der Laufstreifenbasisfläche eine Stollenbasis und parallel zur Laufstreifenbasisfläche eine die Kontaktfläche zum Untergrund zur Verfügung stellende Deckfläche aufweisen und zwischen dieser und der Stollenbasis von Flanken umlaufen sind und an der Deckfläche zur Laufstreifenmitte von einer Stollenkante mit einer zwischen ihren Kantenenden vorliegenden geraden Bezugslinie begrenzt sind.

Ein derartiger Fahrradreifen mit einem Stollenprofil ist beispielsweise bei Fahrrädern der Kategorien Gravel und MTB (Mountainbike) üblich. Derartige Fahrradreifen sind für den Einsatz auf unterschiedlichen Untergründen, insbesondere auf unbefestigten, matschigen oder rutschigen Untergründen, wie auf Forstwegen oder Waldwegen, besonders gut geeignet und für einen derartigen Einsatz entsprechend ausgestaltet. Für derartige Fahrradreifen ist eine große Anzahl unterschiedlicher Stollenprofile bekannt. Einen Fahrradreifen der eingangs genannten Art vertreibt etwa die Firma Continental Reifen Deutschland GmbH unter dem Handelsnamen Kryptotal-Fr. Ein Stollenprofil weist auch der in Fig. 1 der DE 29509996 U1 gezeigte Fahrradreifen auf.

Die schulterseitig angeordneten Stollen der Laufstreifen solcher Fahrradreifen sind üblicherweise großvolumige Stollen mit mehr Gummimaterial als in den mittigen Stollen, da sie vor allem beim Fahren im Gelände auf unebenen Untergründen dafür sorgen müssen, dass der Reifen gut zu den Seitenwänden abgestützt wird.

In den Schulterstollen befindet sich daher auch ein großer Anteil des Laufstreifengewichts.

Der Erfindung liegt die Aufgabe zugrunde, das Gummivolumen und damit das Gewicht der Schulterstollen zu reduzieren ohne die Steifigkeit und die Griffeigenschaften sowie die Laufleistung des Fahrzeugreifens zu beeinträchtigen.

Gelöst wird die gestellte Aufgabe erfindungsgemäß dadurch, dass eine Bezugsebene, die senkrecht zur Laufstreifenbasisfläche sowie senkrecht zur und mittig durch die Bezugslinie verläuft, Schulterstollen in einen, in Abrollrichtung bei Vorwärtsfahrt betrachtet, zuerst in den Untergrund eintretenden, einlaufenden Stollenteil und einen auslaufenden Stollenteil gliedert, wobei der einlaufende Stollenteil ein um 10% bis 50% größeres Gummivolumen aufweist als der auslaufende Stollenteil.

Durch diese Stollengeometrie weisen die Schulterstollen in Abrollrichtung einen Stollenteil auf, welcher eine stärkere Abstützung bewirkt als der zweite, auslaufende Stollenteil. Die Schulterstollen besitzen daher eine richtungsgebundene Funktionalität, die für eine optimale Abstützung im Verhältnis zum Stollenvolumen sorgt. Auf diese Weise kann auch das Stollenvolumen insgesamt optimiert bzw. verringert werden, sodass bei geringerem Gewicht des Fahrzeugreifens Grip- und Laufleistung konstant erhalten bleiben.

Bei einer bevorzugten Ausführung weist der zuerst in den Untergrund eintretende, einlaufenden Stollenteil ein um 15 % bis 30 % größeres Gummivolumen auf als der auslaufende Stollenteil. Derart gestalte Schulterstollen sind hinsichtlich der Gewichtsreduktion des Laufstreifens und einer möglichst optimalen Abstützung besonders ausgewogen.

Bevorzugt sind sämtliche Schulterstollen des Laufstreifens in einen, in Abrollrichtung bei Vorwärtsfahrt betrachtet, zuerst in den Untergrund eintretenden, einlaufenden Stollenteil und einen auslaufenden Stollenteil gegliedert.

Gemäß einer weiteren vorteilhaften Ausgestaltung ist die Bezugslinie zwischen dem Kantenende der die Deckfläche zur Laufstreifenmitte begrenzenden Stollenkante unter einem spitzen Winkel von 5° bis 30° zur Umfangsrichtung orientiert und in Richtung zur Laufstreifenmitte geneigt, wobei, in Abrollrichtung bei Vorwärtsfahrt betrachtet, das der Laufstreifenmitte näher befindliche Kantenende jenes ist, das zuerst in den Untergrund eintritt. Die Schulterstollen sind auf diese Weise gegenüber der Umfangsrichtung des Laufstreifens schräg gestellt, die Abstützung am einlaufenden Stollenteil ist dadurch besonders effektiv und die unter dem spitzen Winkel zur Umfangsrichtung verlaufende Stollenkanten verbessern die Griffperformance der Schulterstollen.

Für die Griffperformance der Schulterstollen ist es zusätzlich von Vorteil, wenn die die Deckfläche zur Laufstreifenmitte begrenzende Stollenkante gerade verläuft und daher mit der zwischen ihren Kantenenden vorliegenden geraden Bezugslinie zusammenfällt.

Für eine Ausgewogenheit zwischen der Gewichtsreduktion des Laufstreifens und einer guten Abstützwirkung des einlaufenden Stollenteils ist es ferner von Vorteil, wenn die Stollenbasis zur Laufstreifenbasisfläche und Richtung Laufstreifenmitte eine parallel zu der die Deckfläche zur Laufstreifenmitte begrenzenden Stollenkante verlaufende Übergangskante aufweist.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Krankenfahrstühle und/oder Motorräder und/oder Fahrzeuge der Fahrzeugklasse L im Sinne der EU Verordnung 2018/858, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb ausgelegt sein. Das Leichtfahrzeug, bevorzugt Fahrrad, kann als Lastenfahrzeug ausgelegt sein. Das Leichtfahrzeug kann zwei, drei, vier oder mehr Räder aufweisen.

Kraftfahrzeuge der Fahrzeugklasse L im Sinne der EU Verordnung 2018/858 umfassen insbesondere Fahrzeuge gemäß den Klassen L1e und/oder L2e und/oder L3e und/oder L4e und/oder L5e und/oder L6e.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf einen Umfangsabschnitt eines Laufstreifens eines Fahrradreifens,
Fig. 2 eine Schrägansicht des Umfangsabschnitts des Laufstreifens und
Fig. 3 eine vergrößerte Ansicht eines Schulterstollens.

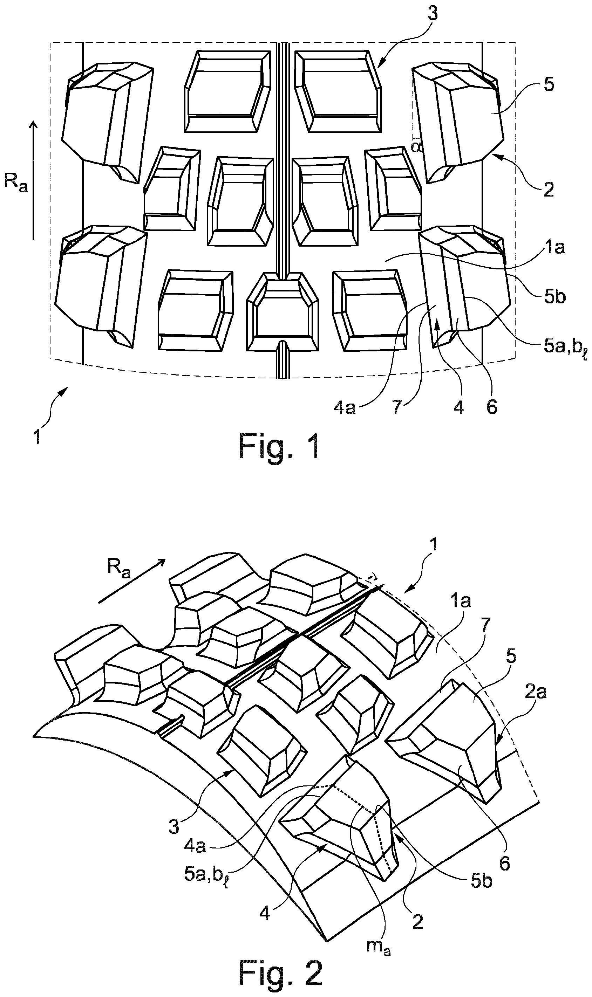

Fig. 1 und 2 zeigen Umfangsabschnitte eines profilierten Laufstreifens 1 eines als Luftreifen ausgeführten Fahrradreifens. Der Laufstreifen 1 weist ein Stollenprofil auf, welches insbesondere für Fahrradreifen der Fahrradkategorien Gravel und MTB geeignet und vorgesehen ist. Die weiteren Bestandteile des Fahrradreifens, wie Seitenwände und Wulstbereiche, sind nicht gezeigt.

Das Stollenprofil des Laufstreifens 1 weist schulterseitig je eine Reihe aus Schulterstollen 2 und zwischen den Schulterstollen 2 mittige Stollen 3 auf. Die Laufstreifenbereiche zwischen den Stollen 2 und 3 sind unstrukturiert oder weitgehend unstrukturiert und bilden eine Laufstreifenbasisfläche 1a. Die Figuren zeigen die Stollen 2, 3 in vereinfachten und schematischen Strichdarstellungen mit scharfkantigen Konturen, wobei am vulkanisierten Reifen das Gummimaterial dafür sorgt, dass die Konturen und Übergänge zumeist und üblicherweise insbesondere kaum merkbar gerundet sind. Die mittigen Stollen 3 bilden zwischen den Schulterstollen 2 in axialer Richtung orientierte Reihen, die in Umfangsrichtung abwechselnd und aufeinanderfolgend aus vier mittigen Stollen 3, zwei mittigen Stollen 3 und drei mittigen Stollen 3 bestehen, wobei auf eine Reihe aus drei mittigen Stollen 3 wieder eine Reihe aus vier mittigen Stollen 3 folgt.

Der Laufstreifen 1 ist, wie noch beschrieben wird, laufrichtungsgebunden gestaltet, sodass bei der Montage eines Fahrradreifens mit einem derartigen Laufstreifen auf eine bestimmte Abrollrichtung bei Vorwärtsfahrt zu achten ist. Diese Abrollrichtung ist in den Figuren 1 und 2 mit dem Pfeil Rₐ gekennzeichnet.

Anhand der Figuren 1 bis 3 wird nun die Ausgestaltung eines Schulterstollens 2 näher beschrieben. Bei der gezeigten Ausführung weist jeder Schulterstollen 2 eine polygonal gestaltete Stollenbasis 4 an der Laufstreifenbasisfläche 1a auf, wobei die Stollenbasis 4 mit gerundeten Übergangskanten in die Laufstreifenbasisfläche 1a übergeht. Eine Übergangskante, die mit 4a bezeichnet ist, ist der Laufstreifenmitte zugewandt und verläuft zur Umfangsrichtung der Laufstreifens unter einem spitzen Winkel α von 5° bis 30°, in Richtung zur Laufstreifenmitte geneigt.

Parallel zur Laufstreifenbasisfläche 1a weist jeder Schulterstollen 2 eine die Kontaktfläche zum Untergrund zur Verfügung stellende Deckfläche 5 auf. Bei der gezeigten Ausführung ist die Deckfläche 5 trapezähnlich mit zwei beim dargestellten Ausführungsbeispiel parallel zueinander und zur Übergangskante 4a der Stollenbasis 4 verlaufenden Stollenkanten 5a, 5b gestaltet. Zwischen sämtlichen Stollenkanten der Deckfläche 5 und den Übergangskanten der Stollenbasis 4 verlaufen den Stollen 2 begrenzende Stollenflanken 6, 7, die üblicherweise ebene oder weitgehend ebene Flächen sind, die in Richtung Laufstreifenbasisfläche 1a nach außen abfallen oder senkrecht zur Laufstreifenbasisfläche 1a verlaufen.

Die Schulterstollen 2 besitzen ferner, abgestimmt auf die polygonale Gestalt der Stollenbasis 4 und der Deckfläche 5, jeweils einen zur jeweiligen Seitenwand des Fahrradreifens, daher zur Laufstreifenaußenseite, im Wesentlichen keilförmig abfallenden und schmäler werdenden Stollenbereich 2a. Die keilförmig in Richtung Laufstreifenaußenseite bzw. nicht dargestellter Seitenwand abfallenden Stollenbereiche 2a können von Stollenflanken 6, 7 begrenzt sind, die auf nicht dargestellte Weise mit Aushöhlungen versehen sind.

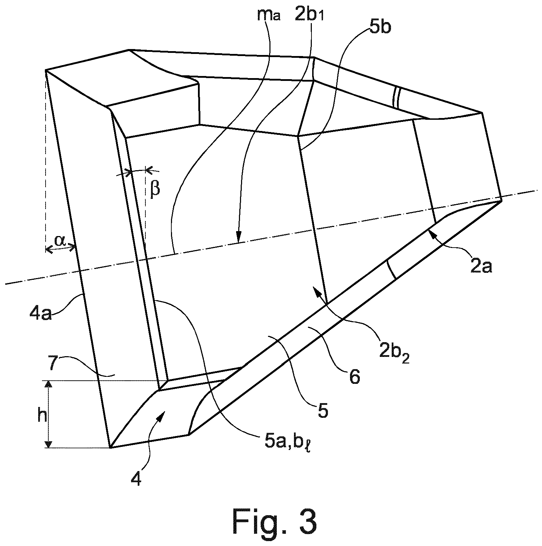

Die Stollenkante 5a, welche die Deckfläche 5 in Richtung zur Laufstreifenmitte begrenzt, verläuft beim dargestellten Ausführungsbeispiel gerade, bei alternativen Ausführungen beispielsweise insgesamt gebogen. Wird zwischen den Enden der Stollenkante 5a eine Bezugslinie bₗ gezogen, die beim dargestellten Ausführungsbeispiel mit der Stollenkante 5a ident ist, so verläuft diese unter einem spitzen Winkel β (Fig. 3) von 5° bis 30° in Richtung zur Laufstreifenmitte geneigt und insbesondere parallel zur Übergangskante 4a der Stollenbasis 4 sowie zur Stollenkante 5b der Deckfläche 5 und bezogen auf die Abrollrichtung des Reifens bei Vorwärtsfahrt derart, dass jeweils das weiter laufstreifenmittig befindliche Ende der Stollenkante 5a zuerst in den Untergrund eintritt. Dabei verlaufen an den Schulterstollen 2 in der einen Schulter die Stollenkanten 5a gegensinnig geneigt zu den jenen der Schulterstollen 2 an der anderen Schulter.

Die Schulterstollen 2 weisen einen in vertikaler bzw. radialer Richtung und zwischen der Laufstreifenbasisfläche 1a und dem Niveau der Deckfläche 5 ermittelte Höhe h auf, die bei MTB Reifen in der Größenordnung von 4,00 mm bis 7,00 mm beträgt. Bei anderen Reifentypen kann diese Höhe geringer oder größer sein, insbesondere in einem Bereich von 2,00 mm bis 11,00 mm.

Die Schulterstollen 2 sind bezüglich ihrer geometrischen Ausgestaltung und bezüglich der Verteilung ihres Gummivolumens auf eine spezielle Weise asymmetrisch gestaltet. Mittels einer Bezugsebene mₐ, die in den Figuren 2 und 3 bei jeweils einem Schulterstollen 2 durch eine gestrichelte Line angedeutet ist und sich senkrecht zur Laufstreifenbasisfläche 1a und zur Bezugslinie bₗ - bei der dargestellten Ausführung zur Stollenkante 5a - ausgehend von deren Mitte erstreckt, lässt sich jeder Schulterstollen 2 in einen, in Abrollrichtung bei Vorwärtsfahrt betrachtet, zuerst in den Untergrund eintretenden, als einlaufend bezeichneten Stollenteil 2b₁ und einen nach diesem eintretenden, als auslaufend bezeichnenden Stollenteil 2b₂ gliedern. Die Schulterstollen 2 sind derart gestaltet, dass ihr einlaufender Stollenteil 2b₁ jeweils ein um 10% bis 50%, insbesondere 15% bis 30%, größeres Gummivolumen aufweist als der auslaufende Stollenteil 2b₂.

Selbstverständlich findet kein abrupter Übergang zwischen den Stollenteilen 2b₁ und 2b₂ statt, sondern das Gummivolumen des Schulterstollens 2 wird beginnend im Stollenteil 2b₁ bis in den Stollenteil 2b₂ hinein kontinuierlich größer.

Die Stollengeometrie der Schulterstollen 2 ist daher derart konzipiert, dass sich die Schulterstollen 2 mit ihrem beim Abrollen des Reifens bei Vorwärtsfahrt, also in Fahrtrichtung, zuerst in den Untergrund eintretenden Stollenteilen 2b₁ am Untergrund stärker abstützen, als mit ihren auslaufenden Stollenteilen 2b₂. Auf diese Weise sind die Schulterstollen 2 besser gewichtsoptimiert als übliche bezüglich der Bezugsebene mₑ symmetrisch gestaltete Schulterstollen.

Bei weiteren gesondert nicht dargestellten Ausgestaltungen sind die Deckflächen der Schulterstollen mit Erhebungen versehen, durch welche eine größere Anzahl an Griffkanten zur Verfügung steht. Alternativ sind die Schulterstollen an der Deckfläche mit einschnittartigen Vertiefungen versehen, die an der Deckfläche ebenfalls Griffkanten aufweisen. Bei weiteren möglichen und nicht dargestellten Ausführungsvarianten sind andere geometrische Ausgestaltungen der Schulterstollen, beispielsweise teilweise bzw. abschnittsweise gerundet, möglich.

Gemäß der Erfindung ausgeführte Reifen können ferner Fahrzeugreifen anderen Typs, insbesondere Fahrzeugluftreifen, etwa für ein Leichtfahrzeug, insbesondere ein Motorrad oder einen Krankenfahrstuhl, sein

### Bezugszeichenliste

- 1: Laufstreifen
- 1a: Laufstreifenbasisfläche
- 2: Schulterstollen
- 3: mittiger Stollen
- 2a: Stollenbereich
- 2b₁, 2b₂: Stollenteil
- 4: Stollenbasis
- 4a: Übergangskante
- 5: Deckfläche
- 5a, 5b: Stollenkante
- 6, 7: Stollenflanke
- α, β: Winkel
- h: Höhe
- mₐ: Bezugsebene
- bₗ: Bezugslinie
- Rₐ: Abrollrichtung bei Vorwärtsfahrt

## Patentansprüche

1. Fahrzeugreifen, bevorzugt für ein Leichtfahrzeug, besonders bevorzugt für ein Fahrrad und/oder einen Krankenfahrstuhl und/oder ein Motorrad, mit einem laufrichtungsgebunden gestalteten Laufstreifen (1) mit einer definierten Abrollrichtung bei Vorwärtsfahrt, wobei der Laufstreifen (1) eine Laufstreifenbasisfläche (1a) und eine Profilierung aus voneinander beabstandeten Schulterstollen (2) und mittigen Stollen (3) aufweist, wobei die Schulterstollen (2) an der Laufstreifenbasisfläche eine Stollenbasis (4) und parallel zur Laufstreifenbasisfläche (1a) eine die Kontaktfläche zum Untergrund zur Verfügung stellende Deckfläche (5) aufweisen und zwischen dieser und der Stollenbasis (4) von Flanken (6, 7) umlaufen sind und an der Deckfläche (5) zur Laufstreifenmitte von einer Stollenkante (5a) mit einer zwischen ihren Kantenenden vorliegenden geraden Bezugslinie (bₗ) begrenzt sind,
**dadurch gekennzeichnet,**
**dass** eine Bezugsebene (mₐ), die senkrecht zur Laufstreifenbasisfläche (1a) sowie senkrecht zur und mittig durch die Bezugslinie (bₗ) verläuft, Schulterstollen (2) in einen, in Abrollrichtung bei Vorwärtsfahrt betrachtet, zuerst in den Untergrund eintretenden, einlaufenden Stollenteil (2b₁) und einen auslaufenden Stollenteil (2b₂) gliedert, wobei der einlaufende Stollenteil (2b₁) ein um 10% bis 50% größeres Gummivolumen aufweist als der auslaufende Stollenteil (2b₂).

2. Fahrzeugreifen nach Anspruch 1, **dadurch gekennzeichnet, dass** der zuerst in den Untergrund eintretende, einlaufende Stollenteil (2b₁) ein um 15 % bis 30% größeres Gummivolumen aufweist als der auslaufende Stollenteil (2b₂).

3. Fahrzeugreifen nach Anspruch 1 oder 2, **dadurch gekennzeichnet, dass** sämtliche Schulterstollen (2) des Laufstreifens (1) in einen, in Abrollrichtung bei Vorwärtsfahrt betrachtet, zuerst in den Untergrund eintretenden, einlaufenden Stollenteil (2b₁) und einen auslaufenden Stollenteil (2b₂) gegliedert sind.

4. Fahrzeugreifen nach einem der Ansprüche 1 bis 3, **dadurch gekennzeichnet, dass** die Bezugslinie (bₗ) zwischen den Kantenenden der die Deckfläche (5) zur Laufstreifenmitte begrenzenden Stollenkante (5a) unter einem spitzen Winkel (β) von 5° bis 30°zur Umfangsrichtung orientiert ist und in Richtung zur Laufstreifenmitte geneigt ist, derart, dass, in Abrollrichtung bei Vorwärtsfahrt betrachtet, das der Laufstreifenmitte näher liegende Kantenende jenes ist, das zuerst in den Untergrund eintritt.

5. Fahrzeugreifen nach einem der Ansprüche 1 bis 4, **dadurch gekennzeichnet, dass** die die Deckfläche (5) zur Laufstreifenmitte begrenzende Stollenkante (5a) gerade verläuft und daher mit der zwischen ihren Kantenenden vorliegenden geraden Bezugslinie (bₗ) zusammenfällt.

6. Fahrzeugreifen nach einem der Ansprüche 1 bis 5, **dadurch gekennzeichnet, dass** die Stollenbasis (4) zur Laufstreifenbasisfläche (1a) und Richtung Laufstreifenmitte eine parallel zu der die Deckfläche (5) zur Laufstreifenmitte begrenzenden Stollenkante (5a) verlaufende Übergangskante (4a) aufweist.
